(19) **Europäisches Patentamt / European Patent Office / Office européen des brevets**

(11) **EP 2 287 722 B1**

(12) **EUROPEAN PATENT SPECIFICATION**

(45) Date of publication and mention
of the grant of the patent:
**21.09.2016 Bulletin 2016/38**

(51) Int Cl.:
*G06F 3/12* (2006.01)  *G06T 3/00* (2006.01)
*H04N 1/393* (2006.01)  *B41J 3/407* (2006.01)
*G06K 15/02* (2006.01)  *G06T 1/00* (2006.01)

(21) Application number: **09829048.9**

(22) Date of filing: **20.11.2009**

(86) International application number:
**PCT/JP2009/069735**

(87) International publication number:
**WO 2010/061800 (03.06.2010 Gazette 2010/22)**

(54) **PRINT DATA GENERATING DEVICE, PRINT DATA GENERATING METHOD, AND PRINT DATA GENERATING PROGRAM**

DRUCKDATENERZEUGUNGSVORRICHTUNG, DRUCKDATENERZEUGUNGSVERFAHREN UND DRUCKDATENERZEUGUNGSPROGRAMM

DISPOSITIF DE GÉNÉRATION DE DONNÉES D'IMPRESSION, PROCÉDÉ DE GÉNÉRATION DE DONNÉES D'IMPRESSION, ET PROGRAMME DE GÉNÉRATION DE DONNÉES D'IMPRESSION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.11.2008 JP 2008304658**

(43) Date of publication of application:
**23.02.2011 Bulletin 2011/08**

(73) Proprietor: **Mimaki Engineering Co., Ltd.**
**Tomi-shi, Nagano 389-0512 (JP)**

(72) Inventors:
• **SEKI, Kazutomo**
  **Tomi-shi**
  **Nagano 389-0512 (JP)**
• **ONOZAWA, Yoshiki**
  **Tomi-shi**
  **Nagano 389-0512 (JP)**
• **HIGUCHI, Masaya**
  **Tomi-shi**
  **Nagano 389-0512 (JP)**
• **KONO, Nobuyuki**
  **Tomi-shi**
  **Nagano 389-0512 (JP)**
• **KOMATSU, Kenichiro**
  **Tomi-shi**
  **Nagano 389-0512 (JP)**
• **ONO, Nobuyuki**
  **Tomi-shi**
  **Nagano 389-0512 (JP)**

(74) Representative: **Gendron, Vincent Christian et al**
**Fédit-Loriot**
**38, avenue Hoche**
**75008 Paris (FR)**

(56) References cited:
**WO-A1-00/51821**  **JP-A- 2001 191 514**
**JP-A- 2006 335 019**  **JP-A- 2007 008 110**
**JP-A- 2007 008 110**  **JP-A- 2007 288 744**

EP 2 287 722 B1

## Description

[Technical Field]

The present invention relates to a print data generating apparatus, a method of generating print data, and a computer program for generating the print data that generate the print data for a three-dimensional (3D) printer. A 3D printer is an apparatus that can print images on the surface of a medium that has a three-dimensional shape.

[Background Art]

Patent Document 1 discloses a 3D printer that prints images on the surface of a medium that has a three-dimensional shape. The 3D printer described in Patent Document 1 is a printer that rotates the medium about the X-axis (B-axis) of a Cartesian coordinate system (XYZ) when printing images on the surface of the medium. However, Patent Document 1 also mentions a drawback in this method that, when the surface on which the image is to be printed is a spherical printing surface, the printed image appears distorted due to a gradual shrunk appearance along the circumferential direction (Y direction) of the spherical printing surface.

A remedial measure to the above problem, that is, a method for correcting the distortion of an image when printing an image on a spherical printing surface has been proposed in Patent Document 1. What is proposed is a method that a host computer that controls the 3D printer is used to intersperse blank spots between ink dots that are lined up along the Y-axis, in which the image is printed, when forming ink dots by spraying ink from an inkjet head on the spherical printing surface disposed directly below the inkjet head. Further, WO00/51821A1 discloses a printer.

[Conventional Art Documents]

[Patent Documents]

[Patent Document 1] Japanese Patent Application Laid-open No. 2007-8110

[Disclosure of Invention]

[Problem to be Solved by the Invention]

Printing on the surface of a medium that has a three-dimensional shape, such as a spherical or a hemispherical shape, is carried out print band by print band. For a spherical or hemispherical medium, the print bands become longer as one goes toward the equator of the medium and become shorter as one goes toward the poles of the medium along the B-axis, which is the axis about which the medium is rotated. However, because a rotation speed about the B-axis is constant for all the print bands, a time required for completion of one rotation about the B-axis is constant for all the print bands. Consequently, the gap between print dots narrows as one goes from the equator toward the poles. Moreover, when the printed image is viewed from an observation point, the gap between the print dots appears to narrow as one goes from the equator toward the poles. As a result, the printed image appears denser along the X-axis.

It is an object of the present invention to provide a print data generating apparatus, a method of generating the print data, and a computer program for generating the print data, that enable reduction in the apparent variation of density in a printed image when printing the image on the surface of a medium that has a three-dimensional shape.

[Means for Solving Problem]

A print data generating apparatus according to one aspect of the present invention generates print data for a printer that prints print band by print band on a surface of a medium that has a spherical or an ellipsoidal printing surface. The print data generating apparatus includes a relative curvature calculating means for calculating, for each print band, a relative curvature relative to a reference print band corresponding to the longest band among the print bands; and an image data thinning means for generating the print data by thinning out image data of each print band according to the relative curvature of the print band.

Furthermore, a method according to another aspect of the present invention is a method of generating print data for a printer that prints print band by print band on a surface of a medium that has a spherical or an ellipsoidal printing surface. The method includes a step of calculating, for each print band, a relative curvature relative to a reference print band corresponding to the longest band the print bands; and a step of generating the print data by thinning out image data of each print band according to the relative curvature of the print band.

Moreover, a computer program according to still another aspect of the present invention is a computer program for generating print data for a printer that prints print band by print band on a surface of a medium that has a spherical or an ellipsoidal printing surface. The computer program causes a computer to function as a relative curvature calculating means for calculating, for each print band, a relative curvature relative to a reference print band corresponding to the longest band the print bands; and an image data thinning means for generating the print data by thinning out image data of each print band according to the relative curvature of the print band.

According to the present invention, because the print data is generated by thinning out the image data of each print band depending on a relative curvature of the medium, apparent variation in the density of a printed image can be reduced when the image is printed on the medium having a three-dimensional shape.

The relative curvature calculating means preferably calculates, for each print band, the relative curvature that represents a circumference of the medium relative to a reference circumference of the medium. The reference circumference is the circumference of the reference print band. Moreover, it is preferable that the image data thinning means increases a degree of thinning of the image data as the relative curvature gets smaller and it decreases a degree of thinning of the image data as the relative curvature gets larger.

[Effect of the Invention]

According to the present invention, an apparent variation of density in a printed image can be reduced when printing an image on the surface of a medium that has a three-dimensional shape.

[Brief Description of Drawings]

[Fig. 1] Fig. 1 is a block diagram of configuration of a 3D printer and a printer control device according to an embodiment of the present invention.
[Fig. 2] Fig. 2 is a schematic diagram of principal parts of the 3D printer shown in Fig. 1.
[Fig. 3] Fig. 3 is an electrical block diagram of the printer control device shown in Fig. 1 according to a first embodiment of the present invention.
[Fig. 4] Fig. 4 is a drawing showing examples of coordinates data and head data.
[Fig. 5] Fig. 5 is an electrical block diagram of a print data generating apparatus according to the first embodiment of the present invention.
[Fig. 6] Fig. 6 is a schematic diagram for explaining a method of calculation of a relative curvature.
[Fig. 7] Fig. 7 is a drawing showing the relative curvatures for all print bands.
[Fig. 8] Figs. 8(a) and 8(b) are schematic diagrams for explaining thinning out of image data performed by the print data generating apparatus shown in Fig. 5.
[Fig. 9] Fig. 9 is a flowchart of a method of generating print data according to an embodiment of the present invention.
[Fig. 10] Fig. 10 is an electrical block diagram of a printer control device according to a second embodiment of the present invention.
[Fig. 11] Fig. 11 is an electrical block diagram of a print data generating apparatus according to the second embodiment.
[Fig. 12] Figs. 12(a) and 12(b) are drawings of a conventional print result.
[Figs. 13] Figs. 13(a) and 13(b) are schematic diagrams for explaining a method of transforming an image shape according to the present invention.

[Fig. 14] Figs. 14(a) and 14(b) are drawings of a print result according to the present invention.
[Fig. 15] Figs. 15(a) to 15(c) are schematic diagrams for explaining thinning out of the image data performed by the print data generating apparatus shown in Fig. 11.
[Fig. 16] Fig. 16 is a schematic diagram for explaining a method of calculation of a relative curvature of a medium that has an ellipsoidal shape.

[Mode(s) of Carrying Out the Invention]

Exemplary embodiments of the present invention are explained below with reference to the accompanying drawings. The same reference numerals are assigned to the parts in different figures if those parts are identical or are equivalent.

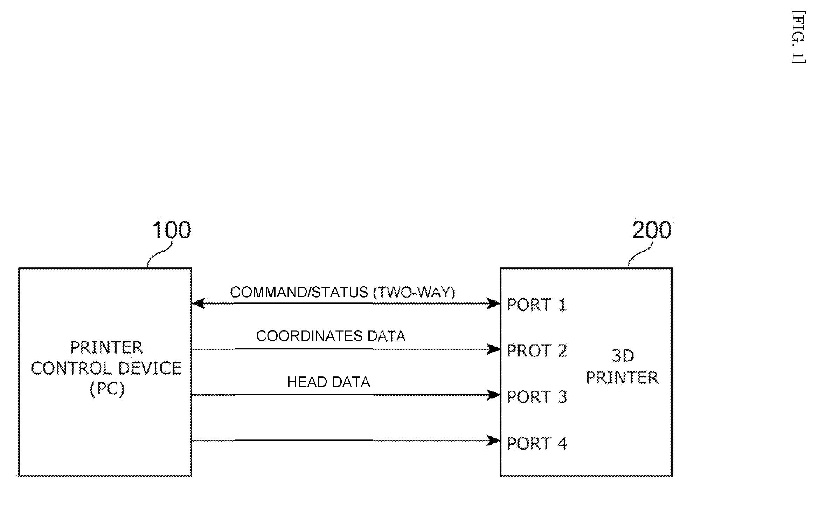

Fig. 1 is a block diagram of a 3D printer and a printer control device according to an embodiment of the present invention. A print data generating apparatus according to the embodiment of the present invention is incorporated in a printer control device 100 that controls a 3D printer 200.

A personal computer (PC), for example, can be used as the printer control device 100. The printer control device 100 carries out a two-way communication with the 3D printer 200 through commands and status using, for example, the Ethernet (10Base-T) system. Specifically, the printer control device 100 transmits to the 3D printer 200 a command to obtain information about the status of the 3D printer 200. Upon receiving the command from the printer control device 100, the 3D printer 200 returns to the printer control device 100 information about its current status. The information about the status is information indicating whether the 3D printer 200 is ready to print.

If the information about the status received from the 3D printer 200 indicates that the 3D printer 200 is ready to print, the printer control device 100 sequentially transmits coordinates data and head data, required for the printing of an image, to the 3D printer 200. The 3D printer 200 stores the coordinates data and the head data sequentially in a memory.

Thereafter, when the printer control device 100 outputs a command for printing, the 3D printer 200 receives the command, and carries out printing based on the coordinates data and the head data.

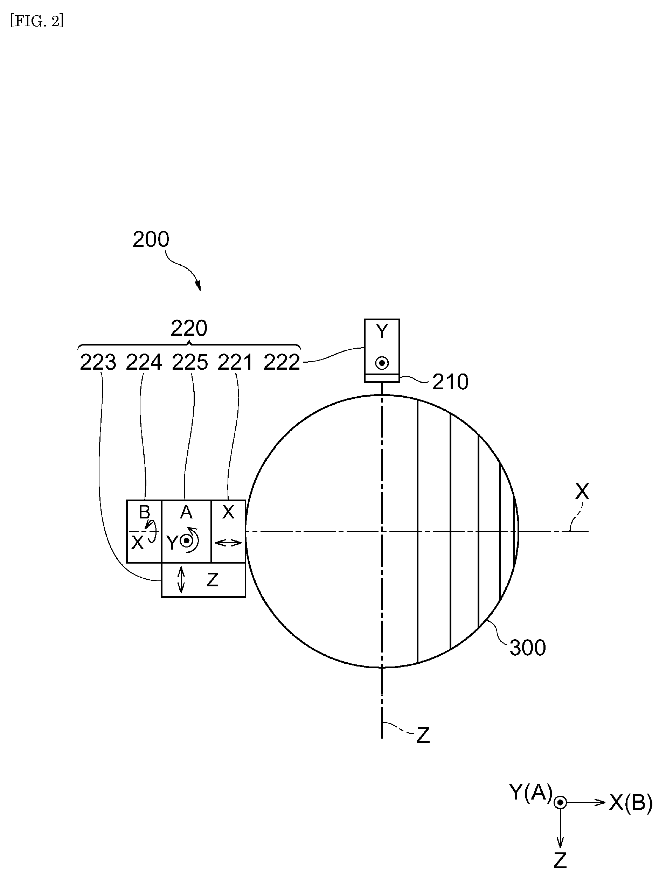

Fig. 2 is a schematic diagram of the principal parts of the 3D printer 200. The 3D printer 200 shown in Fig. 2 is a printer that prints images on the surface of a medium 300 that has a three-dimensional shape, for example, a spherical shape. The 3D printer 200 includes a head 210 from which ink is sprayed onto the surface of the medium 300, and a supporting unit 220 that supports the medium 300 and the head 210.

The supporting unit 220 includes an X-axial movement part 221 capable of moving the medium 300 along the X-axis, a Z-axial movement part 223 capable of moving the medium 300 along the Z-axis, a B-axial rotating part 224 capable of rotating the medium 300 about the X-axis (B-axis), an A-axial rotating part 225 capable of revolving the medium 300 about the Y-axis (A-axis), and a Y-axial movement part 222 capable of moving the head 210 along the Y-axis.

In addition to determining the position of the medium 300 and the head 210 based on the coordinates data received from the printer control device 100, the supporting unit 220 determines print bands on which to print by gradually rotating the medium 300 about the A-axis. The supporting unit 220 rotates the medium 300 about the B-axis and enables printing on the print band, the width of which matches that of the head 210.

The head 210 controls spraying of the ink from a plurality of nozzles and controls the quantity of the ink based on printing parameters in the coordinates data and the head data received from the printer control device 100.

A first embodiment of the printer control device 100 and a second embodiment of the printer control device 100 are described below as a printer control device 100A and a printer control device 100B, respectively.

[First Embodiment]

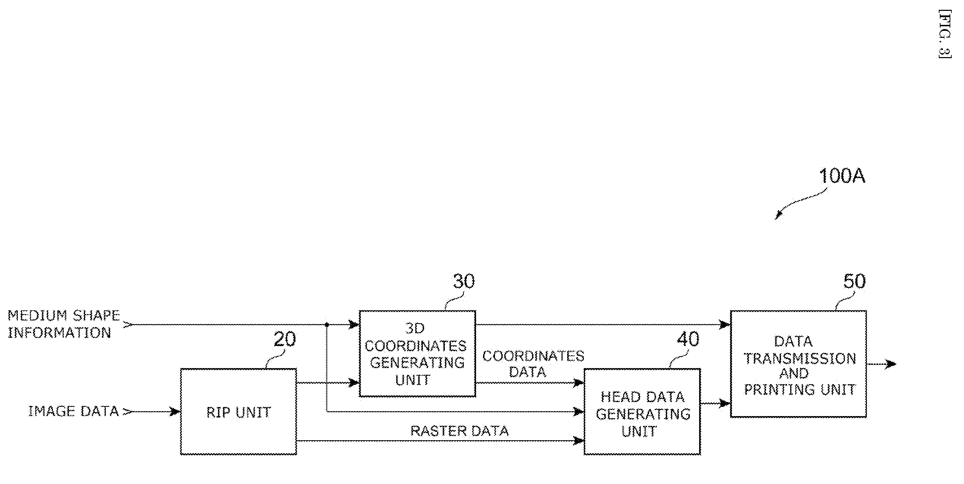

Fig. 3 is a block diagram of the printer control device 100A. The printer control device 100A includes a RIP (Raster Image Processor) unit 20, a 3D coordinates generating unit 30, a head data generating unit (that is the print data generating apparatus according to the embodiment of the present invention) 40, and a data transmission and printing unit 50.

The RIP unit 20 receives image data for a PC and converts the image data to image data for a printer. The RIP unit 20, for example, generates image information, such as an image size, and raster data from the image data. The RIP unit 20 supplies the image information to the 3D coordinates generating unit 30 and supplies the raster data to the head data generating unit 40.

The 3D coordinates generating unit 30 receives the raster data from the RIP unit 20 and also receives medium shape information, and it generates coordinates data so that the 3D printer 200 can carry out printing.

The head data generating unit 40 receives the raster data from the RIP unit 20 and the coordinates data from the 3D coordinates generating unit 30, and it generates the head data that has a one-to-one correspondence with the coordinates data so that the 3D printer 200 can carry out printing.

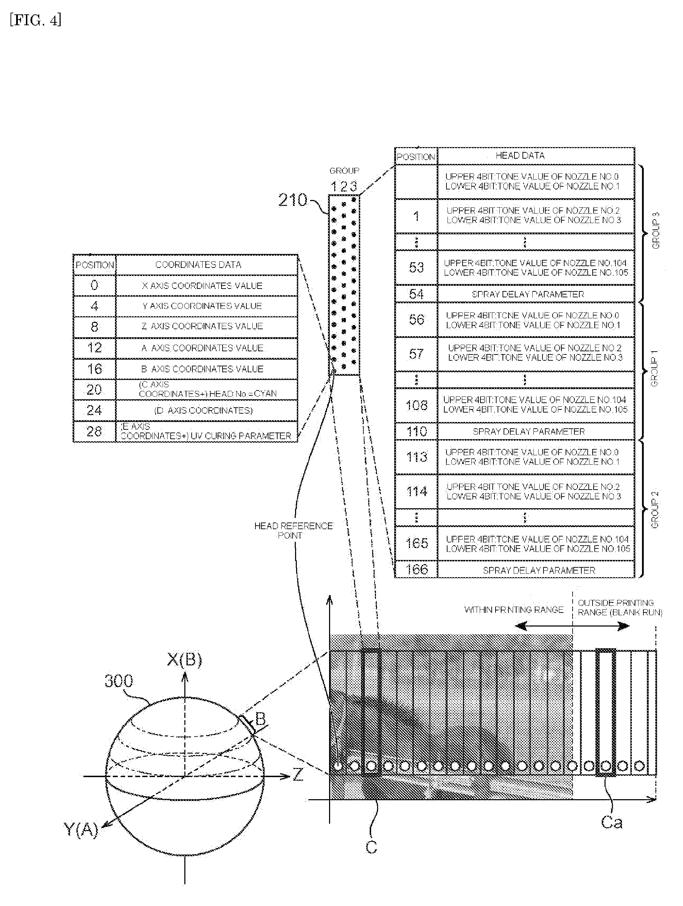

Fig. 4 shows examples of the coordinates data and the head data. In the example shown in Fig. 4, printing is carried out using the head 210 that has 318 nozzles arranged in three groups (columns), each column having 106 nozzles. The coordinates data and the head data are generated for every print cell C, in a one-to-one correspondence, of a print band B on the medium 300. The width of the print band and the size of the print cell are determined by the size of the head, that is, the number of nozzles and the distance between the nozzles.

For example, the position of the bottom left nozzle of the head 210 can be defined as a reference point, and the coordinates data represents coordinate values with respect to the reference point. Specifically, the coordinates data includes a plurality of coordinates values for controlling a position of the supporting unit 220 of the 3D printer 200 that supports the medium 300 and the head 210. In other words, the coordinates data includes an X-axis coordinates value for controlling the position of the X-axial movement part 221, a Y-axis coordinates value for controlling the position of the Y-axial movement part 222, a Z-axis coordinates value for controlling the position of the Z-axial movement part 223, a B-axis coordinates value for controlling the position of the B-axial movement part 224, and an A-axis coordinates value for controlling the position of the A-axial movement part 225.

In the present embodiment, an example is presented in which position controls in the C-axis, the D-axis, and the E-axis are not carried out. If position controls in these directions are to be carried out, the coordinates data can be modified to include the coordinates value of the C-axis, the D-axis, and the E-axis.

A head number corresponding to the ink color (such as black, cyan, magenta, and yellow) and UV (ultraviolet) curing parameters are appended to the coordinates data.

The coordinates value, the head number, and the UV curing parameters are stored in the memory at a storage position associated with them.

The head data is the raster data for one spraying unit of one head for the 3D printer. The head data and the coordinates data have a one-to-one correspondence. The head data determines a tone value for each nozzle from which ink is sprayed. The head data also determines a spray delay parameter between nozzle groups (between the columns of nozzles).

The tone values of the nozzles and the spray delay parameters between the nozzle groups are stored in the memory at a storage position associated with them.

A portion that falls outside the printing range, that is, a print cell Ca in a blank run range, is handled by not specifying the head number included in the coordinates data and not by specifying the tone value of the nozzle included in the head data. The coordinates data and the head data are supplied to the data transmission and printing unit 50.

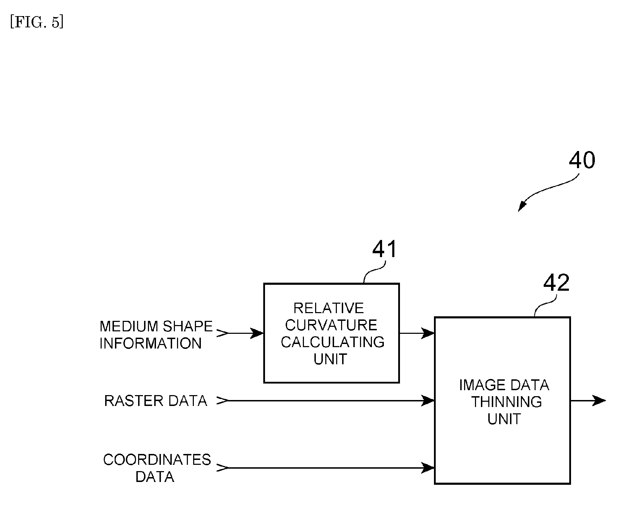

The head data generating unit 40 functions as the print data generating apparatus according to an embodiment of the present invention. The print data generating apparatus 40 receives the medium shape information that indicates the shape of the medium 300 and the raster data from the RIP unit 20, and it modifies the image data according to the shape of the medium 300. The print data generating apparatus 40 includes, as shown in Fig. 5 a relative curvature calculating unit 41 and an image data thinning unit 42.

The relative curvature calculating unit 41 calculates, for each print band, a relative curvature relative to a reference print band among the print bands. Specifically, the relative curvature calculating unit 41 calculates, for each print band, the relative curvature that represents a circumference of the medium 300 relative to a reference circumference. The reference circumference is the circumference of the medium 300 at the position of the reference print band.

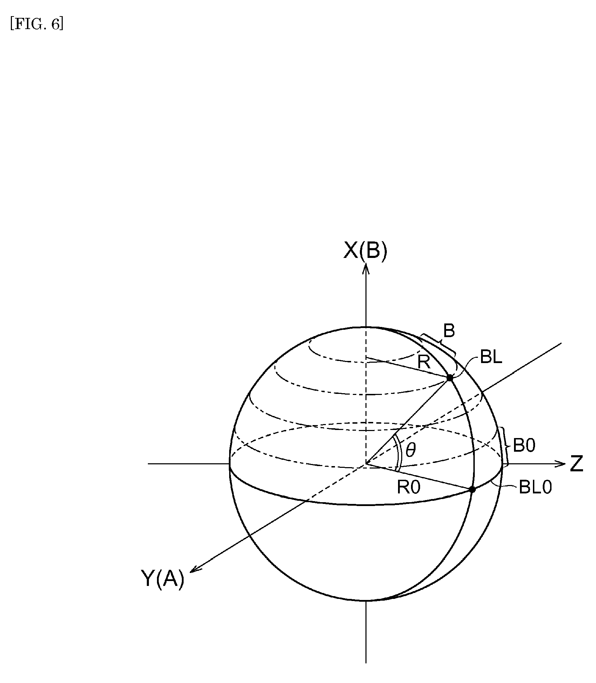

For example, the relative curvature calculating unit 41 calculates the circumference for each print band. Then, the relative curvature calculating unit 41 takes one of the print bands as the reference print band, and treats the circumference of the reference print band as the reference circumference. For example, as shown in Fig. 6, assume that, among the print bands along the B-axis of the spherical medium 300, the print band that is closest to the equator is taken as a reference print band B0. Then, a reference circumference BL0 of the reference print band B0 and a circumference BL of a non-reference print band B can be calculated by using the following equations:

$$BL0=2\pi R0$$

$$BL=2\pi R=2\pi R0\cos\theta$$

where R0 is a radius of rotation of the reference print band B0 about the B-axis, or a radius of the medium 300 at its equator, R is a radius of rotation of the non-reference print band B about the B-axis, and $\theta$ is a central angle of the non-reference print band B relative to the reference print band B0.

The relative curvature calculating unit 41 calculates, for each print band, a relative curvature RC that represents the circumference BL of the print band relative to the reference circumference BL0 by using the following equation:

$$RC=BL/BL0=\cos\theta$$

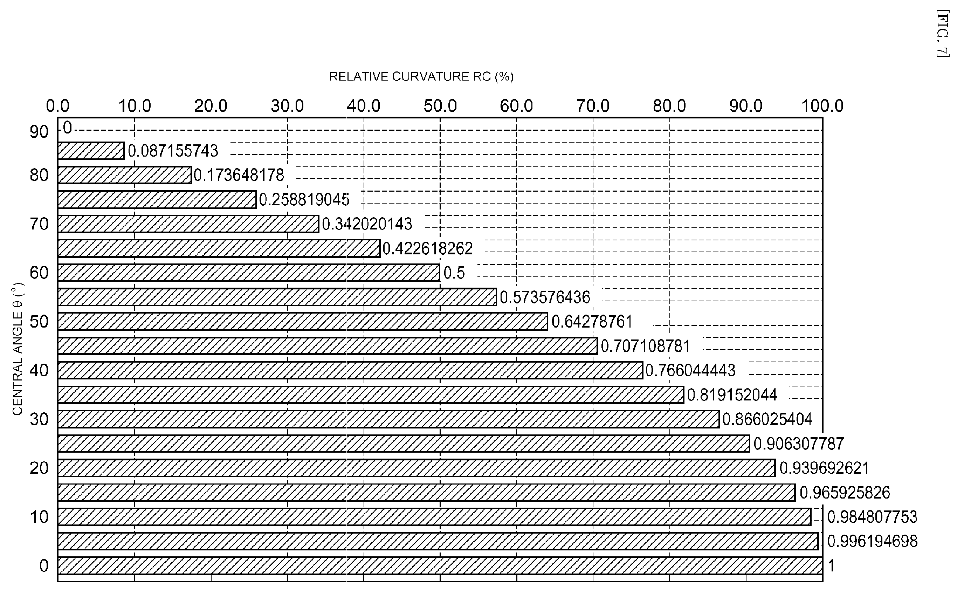

The relative curvature calculating unit 41 supplies, as shown in Fig. 7, the relative curvature RC calculated for each print band to the image data thinning unit 42.

The image data thinning unit 42 generates thinned-out print data for each print band according to the relative curvature RC. Specifically, the image data thinning unit 42 determines a thinning factor POR for the image data for each print band by using the following equation:

$$POR=(1/RC)$$

The image data thinning unit 42 thins out the image data in each print band according to the thinning factor. For example, the image data thinning unit 42 thins the image data by setting the tone value of each nozzle in the head data to zero.

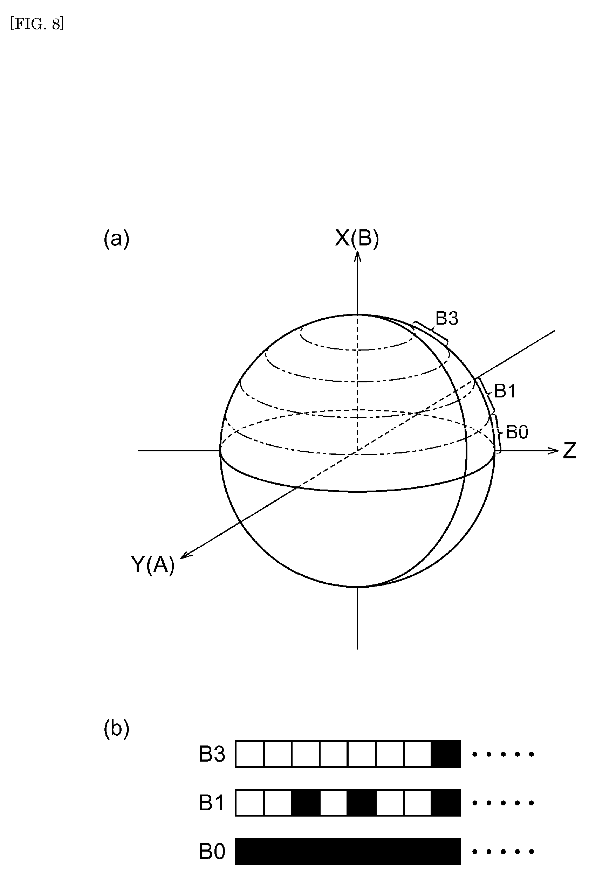

Thus, as shown in Fig. 8, the image data thinning unit 42 increases a degree of thinning of the image data as the relative curvature gets smaller and decreases the degree of thinning as the relative curvature gets larger. Particularly, for the spherical medium 300, the image data thinning unit 42 gradually increases the degree of thinning from the equator toward the poles along the B-axis.

Returning to the explanation of Fig. 3, the data transmission and printing unit 50 performs printing control of the 3D printer 200. For example, the data transmission and printing unit 50 transmits a command to the 3D printer 200 to check its status as explained above. If the 3D printer 200 is ready to print, the data transmission and printing unit 50 sequentially outputs the coordinates data it received from the 3D coordinates generating unit 30 and the head data it received from the head data generating unit 40 to the 3D printer 200. Thereafter, when the data transmission and printing unit 50 outputs a print command, the 3D printer 200 prints the image on the surface of the medium 300.

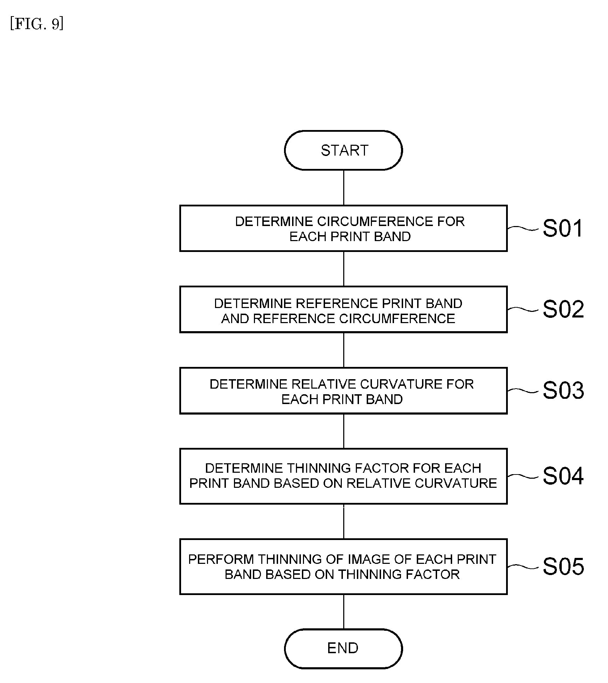

An operation of the print data generating apparatus 40 and a method of generating the print data according to an embodiment of the present invention are described below. Fig. 9 is a flowchart of a print data generation process.

The print data generating apparatus 40 principally has a configuration of a computer that includes a CPU (Central Processing Unit), a ROM (Read-Only Memory), a RAM (Random Access Memory), etc. The functions of the print data generating apparatus 40 shown in Fig. 5 can be realized by the CPU by executing a computer program for generating the print data that is first loaded to the ROM or the RAM. In other words, an overall control of the operation of the print data generating apparatus 40 is carried out by the CPU for the execution of the computer program for generating the print data, and the print data generation process shown in the flowchart in Fig. 9 is performed.

The computer program for generating the print data can be made available on a recording medium, such as a floppy disk, a CD-ROM (Compact Disk-ROM), a DVD (Digital Versatile Disk), a ROM, or a semiconductor memory, or over a network as a computer data signal superimposed on a carrier wave. The print data generating apparatus 40 includes a reading device (not shown) for reading data such as computer programs from the recording medium, and a communication device (not shown) for acquiring computer programs over the network.

In the current example, the CPU of the print data generating apparatus 40 performs the functions of these devices. The print data generating apparatus 40 can also be an ASIC (Application-Specific Integrated Circuit) or an FPGA (Field-Programmable Gate Array) incorporated in the printer control device 100. The print data generating apparatus 40 can have a configuration that includes a CPU that performs an overall control of the printer control device 100, and an ASIC or an FPGA. In the current example, a part of the print data generating apparatus 40 is configured by the ASIC or the FPGA that are distinct from the CPU. For example, the parts in the print data generating apparatus 40 that carry out various calculation processes, such as the relative curvature calculating unit 41 or the image data thinning unit 42, can be configured by the ASIC or the FPGA. If configured by the ASIC or the FPGA, the relative curvature calculating unit 41 and the image data thinning unit 42 can perform their respective calculation processes appropriately and quickly.

The relative curvature calculating unit 41 calculates the circumference BL for each print band B (Step S01), and in addition to determining the reference print band B0 among the print bands, also calculates the reference circumference BL0 of the reference print band B0 (Step S02). Next, the relative curvature calculating unit 41 determines, for each print band, the relative curvature RC that indicates the circumference BL relative to the reference circumference BL0 (Step S03) (See Fig. 7).

The image data thinning unit 42 determines the thinning factor POR for each print band based on the relative curvature RC (Step S04), and the print data is generated by thinning the image data in each print band according to the thinning factor POR (Step S05).

Printing on the surface of the medium 300 that has a three-dimensional shape, such as a spherical or hemispherical shape, is carried out print band by print band. The print bands are longer as one goes toward the equator and are shorter as one goes toward the poles along the B-axis, which is the axis about which the medium 300 is rotated. However, because a rotation speed about the B-axis is constant for all the print bands, a time required for completion of one rotation about the B-axis is constant for all the print bands. Consequently, the gap between print dots narrows as one goes from the equator toward the poles. Moreover, when the printed image is viewed from an observation point, the gap between the print dots appears to narrow as one goes from the equator toward the poles. As a result, the printed image appears denser along the X-axis.

In order to address this issue, the print data generating apparatus 40, the method of generating the print data, and the computer program for generating the print data according to the embodiment generate the print data of the print bands by thinning the image data depending on the relative curvature of the medium 300 at the position of the print band under consideration. Specifically, the degree of thinning of the image data is increased as the relative curvature gets smaller and it is decreased as the relative curvature gets larger. As a result, when an the image is printed on the surface of the medium 300, which has a three-dimensional shape, by using the print data that has been generated in this manner, the apparent variation of density in the printed image can be reduced. Consequently, a high quality image can be printed on the surface of the spherical or hemispherical medium 300.

Second embodiment

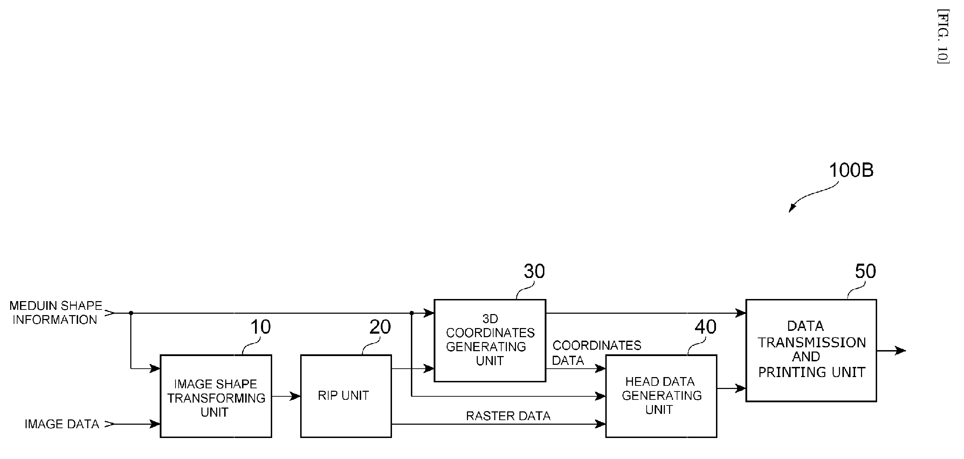

Fig. 10 is a block diagram of a printer control device 100B according to the second embodiment of the present invention. The printer control device 100B shown in Fig. 10 differs from the printer control device 100A according to the first embodiment in that it further includes an image shape transforming device 10. The printer control device 100B is same or substantially similar in functions to the printer control device 100A in all other respects.

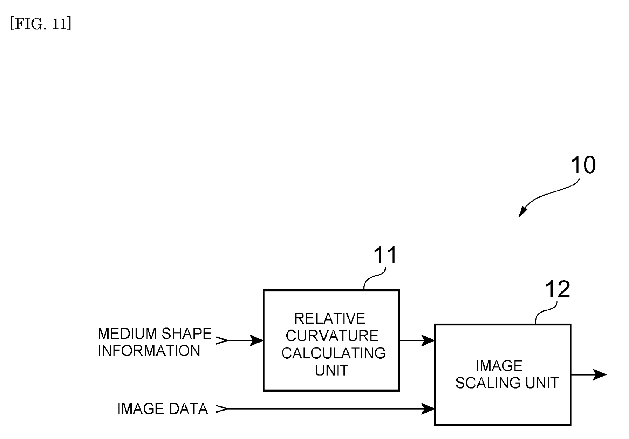

The image shape transforming unit 10 receives the medium shape information that indicates the shape of the medium 300, and the image data to be printed, and transforms the image data according to the shape of the medium 300. As shown in Fig. 11, the image shape transforming unit 10 includes a relative curvature calculating unit 11 that is same or substantially similar in functions to the relative curvature calculating unit 41, and an image scaling unit 12.

The image scaling unit 12 enlarges or reduces the image in each print band depending on the relative curvature RC at the position of the print band under consideration. Specifically, the image scaling unit 12 determines, for each print band, a scaling factor ER for the image by using the following equation:

$$ER=(1/RC)$$

Subsequently, the image scaling unit 12 enlarges or reduces the image of each print band according to the scaling factor for the print band under consideration.

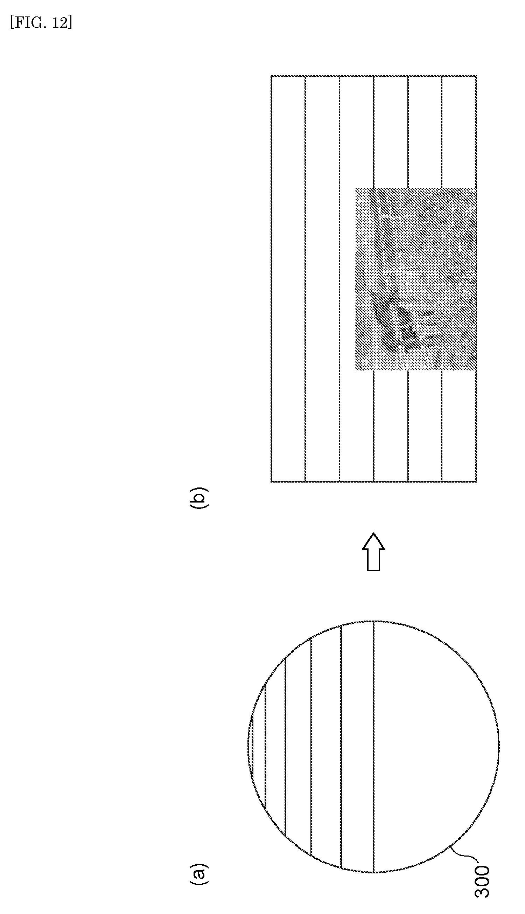

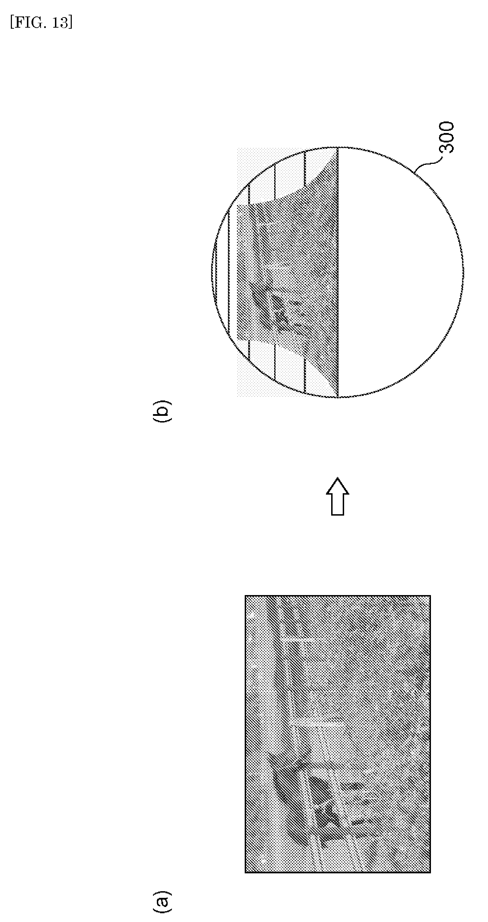

In a conventional image expansion method, as shown in Fig. 12, the surface of the hemispherical medium 300 is expanded into a rectangle, and a rectangular image is printed on the surface. When the rectangular image is printed as it is on the hemispherical medium 300, the image appears distorted as shown in Fig. 13. Specifically, when viewed from above the equator of the medium 300 (that is, when viewed from the surface of the paper on which Fig. 13 has been printed), the lower edge of the image, which is nearer the equator, appears longer and the image appears to shrink toward the pole of the spherical surface. The image thus appears distorted.

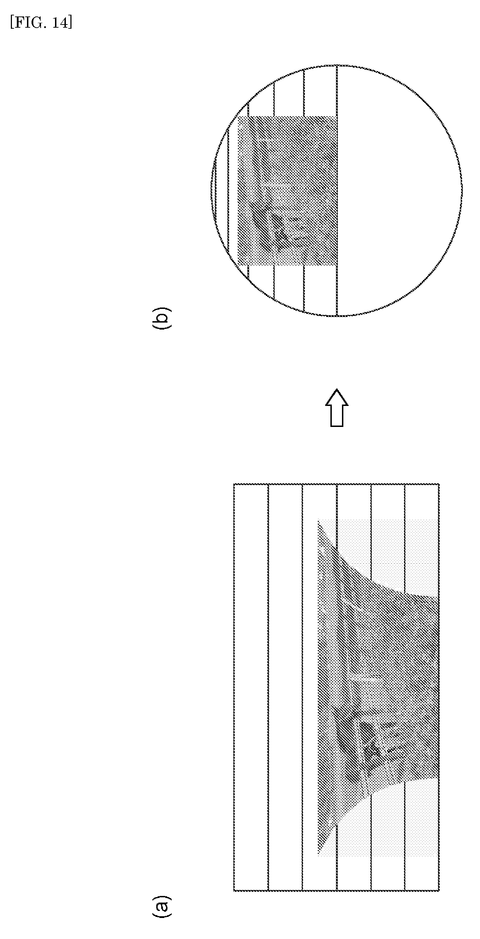

In contrast, as shown in Fig. 14(a), the image shape transforming device 10 according to the present embodiment enlarges or reduces the image in each print band according to the relative curvature of the medium 300 at the position of the print band under consideration.

Specifically, the image is enlarged as the relative curvature of the medium 300 decreases and reduced as the relative curvature of the medium 300 increases. Particularly, with regard to the medium 300 that is spherical, the image scaling unit 12 enlarges the image gradually from the equator toward the poles of the medium 300 along the B-axis. Accordingly, as shown in Fig. 14(b), when a rectangular image is printed on the surface of the medium 300 that has a three-dimensional shape, there will be much reduced apparent distortion when viewed from a given observation point.

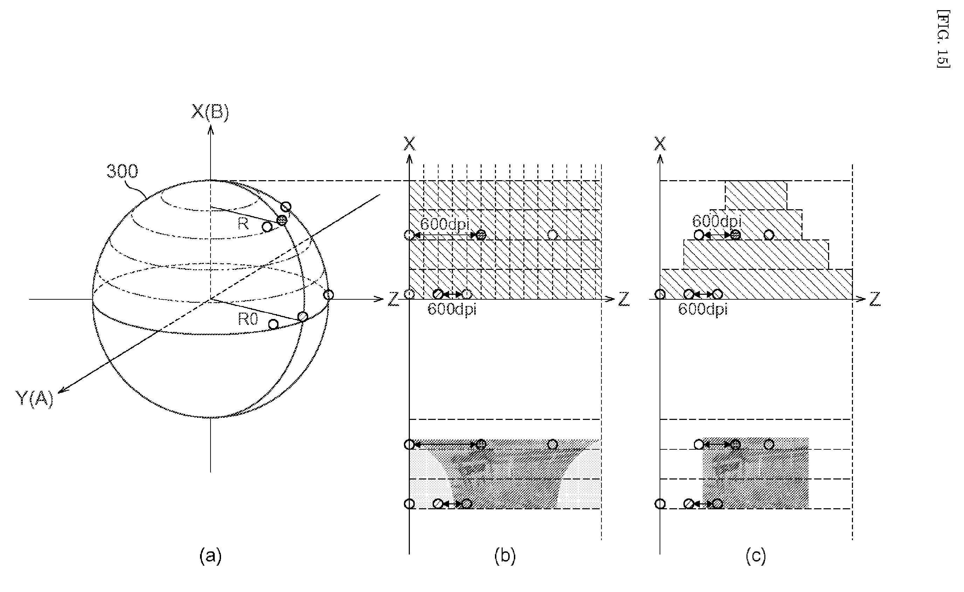

This is explained further with reference to Fig. 15. Fig. 15(b) is a drawing of the surface of the medium 300 that is spherical, which is shown in Fig. 15(a), and expanded into a rectangle. Fig. 15(c) is a drawing in which a length of each print band shown in Fig. 15(b) is converted to a circumference. If an ink spray interval is assumed constant, in Fig. 15(b), a coordinates data count, that is, an ink spray count, will be different for each print band. In other words, the ink spray count increases as one goes from the equator toward the poles of the medium 300 along the B-axis.

In contrast, because 40 increases the degree of thinning of the image data depending on the relative curvature, the degree of thinning of the image data is increased as one goes from the equator toward the poles of the medium 300 along the B-axis. Specifically, the thinning of the image data is realized by setting the tone value in the head data to zero. Thus, while the length of the head data is made uniform for all the print bands, the ink spray interval can be increased as one goes from the equator toward the poles of the medium 300 along the B-axis in the rectangularly expanded view shown in Fig. 15(b). As a result, when the length of each print band is converted to the circumference, as shown in Fig. 15(c), the ink spray interval, that is, a resolution, can be made to appear uniform for all the print bands.

Thus, the print data generating apparatus 40, the method of generating the print data, and the computer program for generating the print data according to the present embodiment are advantageous in that they make the apparent resolution of all the print bands uniform when a shape of the image is being transformed so that, when viewed from a given observation point (in this example, from above the equator), the image has reduced apparent variation in the density.

The invention is not limited to the embodiments explained above. That is, the invention can be modified in various ways. For example, the embodiments are explained by citing a spherical or hemispherical medium as an example; however, the invention can be applied to printing on a medium of various other three-dimensional shapes. For example, the present invention can be applied even if the medium is ellipsoidal or calabash-shaped, and an effect of reduced apparent distortion of the printed image when viewed from a given observation point can be realized.

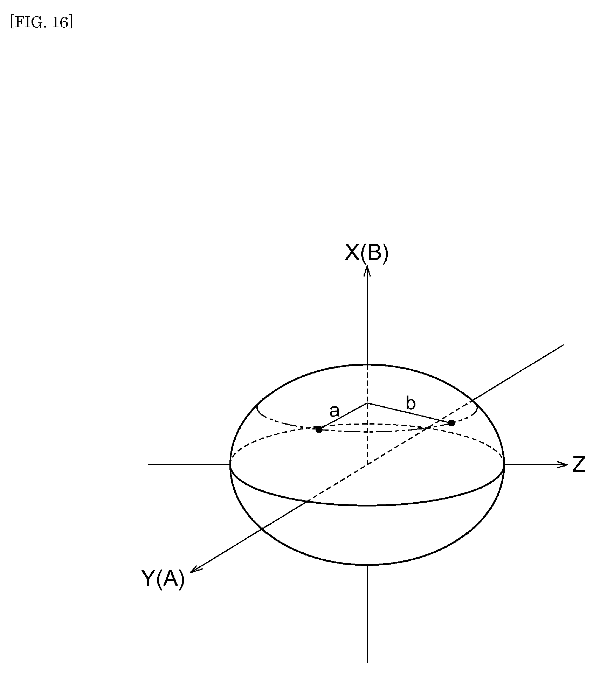

As a modification example, a method of calculation of the relative curvature of an ellipsoid is explained below. As shown in Fig. 16, the circumference BL of a print band of a medium that has an ellipsoidal shape is determined by using the following equation:

$$BL = \pi \times \sqrt{2((a^2+b^2))-(a-b)^2/2.2}$$

where a is a first radius of rotation of the medium and b is a second radius of rotation of the medium. One of the determined circumferences is taken as the reference circumference BL0, and the relative curvature RC that represents the circumference BL relative to the reference circumference BL0 is calculated for each print band. The image can then be enlarged or reduced according to the relative curvature RC.

The coefficient 2.2 in the above equation can be changed to 2.1 to prevent an approximation value from becoming greater than a length of the medium.

In the embodiments explained here, the reference circumference of the medium 300 is taken as the circumference of the reference print band among the print bands, and the relative curvature calculating unit 41 calculates the relative curvature of each print band that represents the circumference of the medium 300 relative to the reference circumference. In an alternative method, a reference curvature 1/R0 can be taken as the curvature of the reference print band among the print bands, and the relative curvature calculating unit 41 can be configured to calculate the relative curvature that represents a curvature 1/R of the print band relative to the reference circumference. In this alternative method, the image data thinning unit 42 can increase the degree of thinning as the relative curvature gets larger, and it can decrease the degree of thinning as the relative curvature gets smaller.

[Industrial Applicability]

The invention is useful for reducing an apparent variation of density of an image printed on the surface of the medium that has a three-dimensional shape.

[Explanations of Letters or Numerals]

10 Image shape transforming unit (Image shape transforming device)
11 Relative curvature calculating unit
12 Image scaling unit
20 RIP unit
30 3D coordinates generating unit
40 Head data generating unit (Print data generating apparatus)
41 Relative curvature calculating unit (Relative curvature calculating means)

42 Image data thinning unit (Image data thinning means) 50 Data transmission and printing unit
100, 100A, and 100B Printer control device
200 3D printer
210 Head
220 Supporting unit
221 X-axial movement part
222 Y-axial movement part
223 Z-axial movement part
224 B-axial rotating part
225 A-axial rotating part
300 Medium

**Claims**

1. A print data generating apparatus (40) for generating print data for a printer capable of printing print band by print band on a surface of a medium that has a spherical or an ellipsoidal printing surface, **characterized in that** the print data generating apparatus comprises:

    a relative curvature calculating means (41) for calculating, for each print band, a relative curvature relative to a reference print band corresponding to the longest band among the print bands; and
    an image data thinning means (42) for generating the print data by thinning out image data of each print band according to the relative curvature of the print band.

2. The print data generating apparatus according to claim 1, wherein
the relative curvature calculating means is configured to calculate, for each print band, the relative curvature that represents a circumference of the medium relative to a reference circumference of the medium, the reference circumference being the circumference of the reference print band.

3. The print data generating apparatus according to claim 2, wherein
the image data thinning means is configured to increase a degree of thinning of the image data as the relative curvature gets smaller.

4. The print data generating apparatus according to claim 2, wherein
the image data thinning means is configured to decrease a degree of thinning of the image data as the relative curvature gets larger.

5. A method of generating print data for a printer capable of printing print band by print band on a surface of a medium that has a spherical or an ellipsoidal printing surface, the method comprising:

a step of calculating, for each print band, a relative curvature relative to a reference print band corresponding to the longest band among the print bands; and
a step of generating the print data by thinning out image data of each print band according to the relative curvature of the print band.

6. A computer program for generating print data for a printer capable of printing print band by print band on a surface of a medium that has a spherical or an ellipsoidal printing surface, the computer program causing a computer to function as:

    a relative curvature calculating means for calculating, for each print band, a relative curvature relative to a reference print corresponding to the longest band among the print bands; and
    an image data thinning means for generating the print data by thinning out image data of each print band according to the relative curvature of the print band.

**Patentansprüche**

1. Druckdatenerzeugungsvorrichtung (40) zum Erzeugen von Druckdaten für einen Drucker, der in der Lage ist, Druckband für Druckband auf eine Oberfläche eines Mediums zu drucken, das eine sphärische oder ellipsenförmige Druckoberfläche aufweist, **dadurch gekennzeichnet, dass** die Druckdatenerzeugungsvorrichtung umfasst:

    ein Relative-Krümmung-Berechnungsmittel (41) zum Berechnen, für jedes Druckband, einer relativen Krümmung relativ zu einem Referenzdruckband, das dem längsten Band unter den Druckbändern entspricht; und
    ein Bilddatenausdünnungs- bzw. -verschlankungsmittel (42) zum Erzeugen der Druckdaten durch Ausdünnen von Bilddaten jedes Druckbands gemäß der relativen Krümmung des Druckbands.

2. Druckdatenerzeugungsvorrichtung nach Anspruch 1, wobei das Relative-Krümmung-Berechnungsmittel konfiguriert ist, für jedes Druckband die relative Krümmung zu berechnen, die einen Umfang des Mediums relativ zu einem Referenzumfang des Mediums darstellt, wobei der Referenzumfang der Umfang des Referenzdruckbands ist.

3. Druckdatenerzeugungsvorrichtung nach Anspruch 2, wobei das Bilddatenausdünnungsmittel konfiguriert ist, einen Ausdünnungs- bzw. Verschlankungsgrad der Bilddaten in dem Maße zu erhöhen, wie die relative Krümmung geringer wird.

**4.** Druckdatenerzeugungsvorrichtung nach Anspruch 2, wobei das Bilddatenausdünnungsmittel konfiguriert ist, einen Ausdünnungs- bzw. Verschlankungsgrad der Bilddaten in dem Maße zu verringern, wie die relative Krümmung größer wird.

**5.** Verfahren zum Erzeugen von Druckdaten für einen Drucker, der in der Lage ist, Druckband für Druckband auf eine Oberfläche eines Mediums zu drucken, das eine sphärische oder ellipsenförmige Druckoberfläche aufweist, wobei das Verfahren umfasst:

einen Schritt des Berechnens, für jedes Druckband, einer relativen Krümmung relativ zu einem Referenzdruckband, das dem längsten Band unter den Druckbändern entspricht; und einen Schritt des Erzeugens der Druckdaten durch Ausdünnen von Bilddaten jedes Druckbands gemäß der relativen Krümmung des Druckbands.

**6.** Computerprogramm zum Erzeugen von Druckdaten für einen Drucker, der in der Lage ist, Druckband für Druckband auf eine Oberfläche eines Mediums zu drucken, das eine sphärische oder ellipsenförmige Druckoberfläche aufweist, wobei das Computerprogramm einen Computer veranlasst, zu fungieren als:

ein Relative-Krümmung-Berechnungsmittel zum Berechnen, für jedes Druckband, einer relativen Krümmung relativ zu einem Referenzdruckband, das dem längsten Band unter den Druckbändern entspricht; und ein Bilddatenausdünnungs- bzw. -verschlankungsmittel zum Erzeugen der Druckdaten durch Ausdünnen von Bilddaten jedes Druckbands gemäß der relativen Krümmung des Druckbands.

**Revendications**

**1.** Dispositif de production de données d'impression (40) destiné à produire des données d'impression pour une imprimante pouvant imprimer bande d'impression par bande d'impression sur une surface d'un support qui présente une surface d'impression sphérique ou ellipsoïdale, **caractérisé en ce que** le dispositif de production de données d'impression comprend :

un moyen de calcul de courbure relative (41) destiné à calculer, pour chaque bande d'impression, une courbure relative par rapport à une bande d'impression de référence correspondant à la bande la plus longue parmi les bandes d'impression ; et

un moyen de réduction de données d'image (42) destiné à produire des données d'impression en réduisant les données d'image de chaque bande d'impression en fonction de la courbure relative de la bande d'impression.

**2.** Dispositif de production de données d'impression (40) selon la revendication 1, dans lequel le moyen de calcul de courbure relative est configuré de manière à calculer, pour chaque bande d'impression, la courbure relative qui représente une circonférence du support par rapport à une circonférence de référence du support, la circonférence de référence étant la circonférence de la bande d'impression de référence.

**3.** Dispositif de production de données d'impression (40) selon la revendication 2, dans lequel le moyen de réduction de données d'image est configuré de manière à augmenter un degré de réduction des données d'image à mesure que la courbure relative devient plus faible.

**4.** Dispositif de production de données d'impression (40) selon la revendication 2, dans lequel le moyen de réduction de données d'image est configuré de manière à diminuer un degré de réduction des données d'image à mesure que la courbure relative devient plus importante.

**5.** Procédé de production de données d'impression pour une imprimante capable d'imprimer bande d'impression par bande d'impression sur une surface d'un support qui présente une surface d'impression sphérique ou ellipsoïdale, le procédé comprenant :

une étape de calcul, pour chaque bande d'impression, d'une courbure relative par rapport à une bande d'impression de référence correspondant à la bande la plus longue parmi les bandes d'impression ; et une étape de production de données d'impression en réduisant des données d'image de chaque bande d'impression en fonction de la courbure relative de la bande d'impression.

**6.** Programme informatique destiné à produire des données d'impression pour une imprimante pouvant imprimer bande d'impression par bande d'impression sur une surface d'un support qui présente une surface d'impression sphérique ou ellipsoïdale, le programme informatique amenant un ordinateur à fonctionner comme :

un moyen de calcul de courbure relative destiné à calculer, pour chaque bande d'impression, une courbure relative par rapport à une impression de référence correspondant à la bande la plus longue parmi les bandes d'impression ; et un moyen de réduction de données d'image destiné à produire les données d'impression en réduisant des données d'image de chaque bande d'impression en fonction d'une courbure relative de la bande d'impression.

[FIG. 1]

[FIG. 2]

[FIG. 3]

100A

MEDIUM SHAPE INFORMATION

IMAGE DATA

**20** RIP UNIT

**30** 3D COORDINATES GENERATING UNIT

COORDINATES DATA

RASTER DATA

**40** HEAD DATA GENERATING UNIT

**50** DATA TRANSMISSION AND PRINTING UNIT

[FIG. 4]

| POSITION | HEAD DATA | |
|---|---|---|
| | UPPER 4BIT:TONE VALUE OF NOZZLE NO.0<br>LOWER 4BIT:TONE VALUE OF NOZZLE NO.1 | GROUP 3 |
| 1 | UPPER 4BIT:TONE VALUE OF NOZZLE NO.2<br>LOWER 4BIT:TONE VALUE OF NOZZLE NO.3 | |
| ⋮ | ⋮ | |
| 53 | UPPER 4BIT:TONE VALUE OF NOZZLE NO.104<br>LOWER 4BIT:TONE VALUE OF NOZZLE NO.105 | |
| 54 | SPRAY DELAY PARAMETER | |
| 56 | UPPER 4BIT:TONE VALUE OF NOZZLE NO.0<br>LOWER 4BIT:TONE VALUE OF NOZZLE NO.1 | GROUP 1 |
| 57 | UPPER 4BIT:TONE VALUE OF NOZZLE NO.2<br>LOWER 4BIT:TONE VALUE OF NOZZLE NO.3 | |
| ⋮ | ⋮ | |
| 108 | UPPER 4BIT:TONE VALUE OF NOZZLE NO.104<br>LOWER 4BIT:TONE VALUE OF NOZZLE NO.105 | |
| 110 | SPRAY DELAY PARAMETER | |
| 113 | UPPER 4BIT:TONE VALUE OF NOZZLE NO.0<br>LOWER 4BIT:TONE VALUE OF NOZZLE NO.1 | GROUP 2 |
| 114 | UPPER 4BIT:TONE VALUE OF NOZZLE NO.2<br>LOWER 4BIT:TONE VALUE OF NOZZLE NO.3 | |
| ⋮ | ⋮ | |
| 165 | UPPER 4BIT:TONE VALUE OF NOZZLE NO.104<br>LOWER 4BIT:TONE VALUE OF NOZZLE NO.105 | |
| 166 | SPRAY DELAY PARAMETER | |

GROUP
1 2 3

210

| POSITION | COORDINATES DATA |
|---|---|
| 0 | X AXIS COORDINATES VALUE |
| 4 | Y AXIS COORDINATES VALUE |
| 8 | Z AXIS COORDINATES VALUE |
| 12 | A AXIS COORDINATES VALUE |
| 16 | B AXIS COORDINATES VALUE |
| 20 | (C AXIS COORDINATES+) HEAD No = CYAN |
| 24 | (D AXIS COORDINATES) |
| 28 | (E AXIS COORDINATES+) UV CURING PARAMETER |

HEAD REFERENCE POINT

WITHIN PRINTING RANGE

OUTSIDE PRINTING RANGE (BLANK RUN)

X(B)

300

B

Z

Y(A)

C

Ca

[FIG. 5]

40

41

MEDIUM SHAPE
INFORMATION → RELATIVE
CURVATURE
CALCULATING
UNIT →

42

RASTER DATA → IMAGE DATA
THINNING
UNIT →

COORDINATES
DATA →

[FIG. 6]

[FIG. 7]

[FIG. 8]

(a)

(b)

[FIG. 9]

```
                    ┌─────────────┐
                    │    START    │
                    └──────┬──────┘
                           │
         ┌─────────────────────────────────┐
         │   DETERMINE CIRCUMFERENCE FOR    │──── S01
         │        EACH PRINT BAND           │
         └─────────────────┬───────────────┘
                           │
         ┌─────────────────────────────────┐
         │  DETERMINE REFERENCE PRINT BAND  │──── S02
         │   AND REFERENCE CIRCUMFERENCE    │
         └─────────────────┬───────────────┘
                           │
         ┌─────────────────────────────────┐
         │  DETERMINE RELATIVE CURVATURE FOR│──── S03
         │        EACH PRINT BAND           │
         └─────────────────┬───────────────┘
                           │
         ┌─────────────────────────────────┐
         │  DETERMINE THINNING FACTOR FOR EACH│──── S04
         │ PRINT BAND BASED ON RELATIVE CURVATURE│
         └─────────────────┬───────────────┘
                           │
         ┌─────────────────────────────────┐
         │ PERFORM THINNING OF IMAGE OF EACH PRINT│──── S05
         │   BAND BASED ON THINNING FACTOR  │
         └─────────────────┬───────────────┘
                           │
                    ┌─────────────┐
                    │     END     │
                    └─────────────┘
```

[FIG. 10]

100B

IMAGE SHAPE TRANSFORMING UNIT — 10

RIP UNIT — 20

3D COORDINATES GENERATING UNIT — 30

HEAD DATA GENERATING UNIT — 40

DATA TRANSMISSION AND PRINTING UNIT — 50

MEDUIN SHAPE INFORMATION

IMAGE DATA

COORDINATES DATA

RASTER DATA

[FIG. 11]

10

11

MEDIUM SHAPE
INFORMATION →
→ RELATIVE
CURVATURE
CALCULATING
UNIT
→ 12
IMAGE
SCALING UNIT →

IMAGE DATA →

[FIG. 12]

(a)

(b)

300

[FIG. 13]

(a)

(b)

300

[FIG. 14]

(a)

(b)

[FIG. 15]

[FIG. 16]

**EP 2 287 722 B1**

REFERENCES CITED IN THE DESCRIPTION

**Patent documents cited in the description**

- WO 0051821 A1
- JP 2007008110 A